(19) Europäisches Patentamt
European Patent Office
Office européen des brevets

(11) **EP 2 494 760 B1**

(12) **EUROPEAN PATENT SPECIFICATION**

(45) Date of publication and mention
of the grant of the patent:
**26.08.2015 Bulletin 2015/35**

(21) Application number: **10765534.2**

(22) Date of filing: **23.09.2010**

(51) Int Cl.:
***H04L 29/06*** *(2006.01)*  ***H04L 29/12*** *(2006.01)*

(86) International application number:
**PCT/US2010/050000**

(87) International publication number:
**WO 2011/056317 (12.05.2011 Gazette 2011/19)**

(54) **METHOD FOR PROVIDING SECURITY ASSOCIATIONS FOR ENCRYPTED PACKET DATA**

VERFAHREN ZUR BEREITSTELLUNG VON SICHERHEITSASSOZIATIONEN FÜR
VERSCHLÜSSELTE PAKETDATEN

PROCÉDÉ DE FOURNITURE D'ASSOCIATIONS DE SÉCURITÉ POUR DONNÉES PAR PAQUETS
CRYPTÉES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.10.2009 GB 0918795**

(43) Date of publication of application:
**05.09.2012 Bulletin 2012/36**

(73) Proprietor: **Motorola Solutions, Inc.
Schaumburg, IL 60196 (US)**

(72) Inventor: **CHATER-LEA, David, J.
Berkshire RG45 6EX (GB)**

(74) Representative: **Treleven, Colin
Optimus Patents Limited
Grove House
Lutyens Close
Chineham Court
Basingstoke Hampshire RG24 8AG (GB)**

(56) References cited:
**US-A1- 2005 138 204     US-A1- 2008 083 011**

**Description**

FIELD OF THE DISCLOSURE

The present disclosure relates generally to secure transmission of packets in a communication system and more particularly to providing security associations for encrypted packet data.

BACKGROUND

In many instances today, when a source endpoint sends information to a destination endpoint, the information may travel through an unprotected network such as the Internet. Depending on the nature of the information, it may need to be secured in one or more ways. For example, the endpoints may implement one or more core security services, such as confidentiality, authentication, etc., wherein confidentiality (e.g., the use of encryption/decryption algorithms) provides information privacy and is applied to the information so that it is understandable only by the intended recipient, and authentication is a process that evaluates the genuineness of the originator and recipient of the information.

A number of existing security protocols can be used to provide the core security services. One such suite of protocols is Internet Protocol Security (IPsec) defined in a number of standards documents specified by the Internet Engineering Task Force (IETF). (see, for example, http://www.ietf.org) In accordance with these existing protocols, including IPsec, in order for an endpoint to protect the information that it sends to another endpoint (or conversely in order to receive and decrypt protected information from an endpoint) a security association (SA) must be established. A SA, as the term is used herein, comprises elements that describe protocols and parameters (such as keys and algorithms) used by an endpoint to secure information or traffic flowing in one direction. Therefore, in normal bi-directional traffic, the flows are secured by a pair of SAs. The SA elements are stored in a security association database (SAD). These SA elements include for example, but are not limited to, a security parameter index, a source address, a destination address, security parameters such as a security protocol identifier (ID), one or more key IDs, one or more algorithm IDs, etc., that enable an endpoint to determine how to encrypt/decrypt and/or authenticate information sent to or from another endpoint.

There are two methods for provisioning SAs into an endpoint. The first method is manual provisioning, e.g., using a key variable loader (KVL). However, this method is only practical when there are a limited number of SA elements to be provisioned and when those elements do not change over time. However, many systems are configured with an infrastructure endpoint (e.g., a server or a gateway) that communicates with hundreds or even thousands of endpoints (e.g., subscriber units, computer terminals, etc.) that have addresses that may change over time, wherein manually provisioning the infrastructure endpoint with SAs for all of the endpoints in the system is impractical. In these system configurations, the second method of dynamic provisioning is needed.

One such dynamic provisioning method is the implementation of the well known Internet Security Exchange (IKE) protocol defined in Request for Comments (RFC) 4306 published in December 2005, wherein the two endpoints negotiate the SA elements through a message signaling exchange. A drawback of the IKE protocol, however, is that radio frequency resources or bandwidth in the system is adversely affected when there are large numbers of endpoint users in the system due to the number of messages that need to be exchanged to establish all of the SAs. This problem is magnified in systems that use narrowband links. Moreover, when there are large numbers of endpoint users in the system, the SAD in an infrastructure endpoint can quickly become unmanageable. In this case, a symmetric key management system, where security associations are provided from a central server such as a Key Management Facility (KMF) becomes the only practical solution.

When tunnel mode encryption is used for data with symmetric key management, Security Association Database and Security Policy Database entries must be set up individually for each tunnel end point, and each tunnel end point may support many data hosts, each requiring a separate security association. Where there are thousands of mobiles on a system supporting E2E (end to end) data, this therefore requires thousands of individual association settings to configure - which is impractical when using symmetric key management supplied by a key management facility (KMF). It will be appreciated by those of ordinary skill in the art that current encryption modules may have a finite limit in the number of associations that they support, for example a few hundred. Symmetric key management is used by mobile radio systems and specified in standards (e.g. SFPG Recommendation 11 for TETRA).

US 20018/083011A1 discloses a method or an apparatus for communicating securitypolicy information between at least one Key Authority Point (KAP) and at least one Policy Enforcement Point (PEP), thereby eliminating the need to manually install security policies on each network device. The policies are, instead, defined in a high level manner.

Accordingly, there is a need for a method for providing security associations for encrypted packet data.

BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.

FIG. 1 is a block diagram of a communication system.

FIG. 2 is a block diagram of an infrastructure endpoint.

FIG. 3 is a flow diagram of a method for secure packet transmission in accordance with some embodiments.

FIG. 4 is a flow diagram of a method of composing a security association in accordance with some embodiments.

FIG. 5 illustrates an addressing diagram in accordance with some embodiments.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

It will be appreciated by those of ordinary skill in the art that multiple destination endpoint addresses may require the use of the same tunnel endpoint address, and that there may be multiple combinations of tunnel endpoint addresses with data destination addresses behind each. Conventionally even following the scheme using provisioning from a KMF, multiple key management messages may be required to configure each encryption device, and there may be many hundreds of these devices on a network. A simple means of providing the device performing the encryption with the means of populating its SAD with tunnel end point addresses associated with destination addresses is required, which uses as few KMMs as possible as these can add extra load to the network.

In accordance with some embodiments provided herein, a method for providing security associations for one or more encrypted data packets includes operating a source endpoint to: define a set of destination host addresses for a security association to apply; determine an address offset; calculate a security endpoint address range from the destination host address range using the address offset; and apply the security association to one or more encrypted data packets destined for at least one destination host address which is to be sent via a calculated security endpoint in the security endpoint address range.

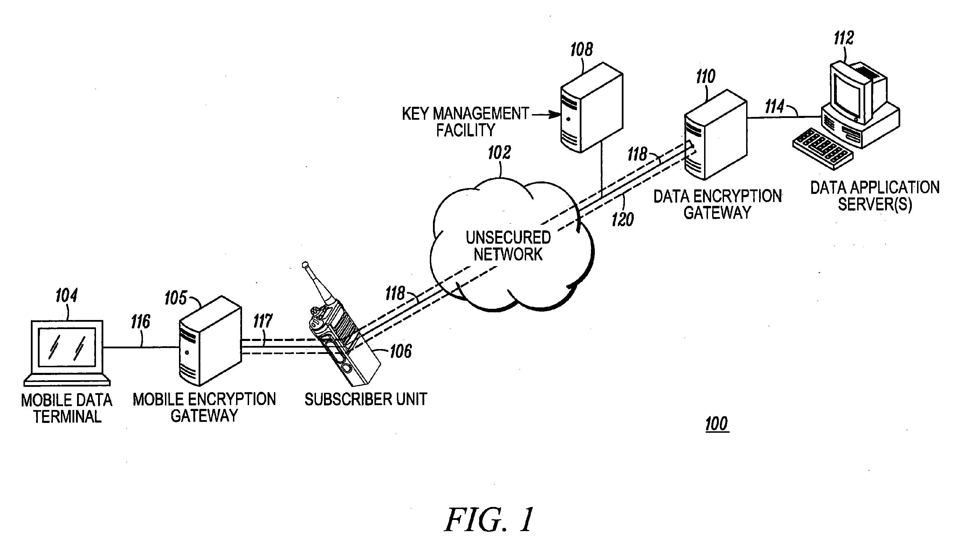

FIG. 1 is a block diagram of a communication system 100. For example, communication system 100 may be an Association of Public Safety Communications Officials International (APCO) 25 compliant system or a Terrestrial Trunked Radio (TETRA) compliant system. Communication system 100 comprises a key management facility (KMF) 108, a data encryption gateway (DEG) 110, one or more data application servers (DAS) 112, a mobile data terminal (MDT) 104, a Mobile Encryption Gateway (MEG) 105 and a subscriber unit (SU) 106. For purposes of the teachings herein, we will assume that the MDT 104 and the MEG 105 communicate with each other in a secured network; therefore a link 116 between the MDT 104 and the SU 106 is an unsecured link, meaning that no security protocol is implemented to send packets on this link. Likewise, the DEG 110 and the DAS(s) 112 communicate with each other in a secured network; therefore a link 114 between the DEG 110 and the DAS(s) 112 is also an unsecured link.

However, when an application on the data application server 112 needs to communicate with an application on the MDT 104 and vice versa, the packets sent therebetween travel along paths 117 and 118 through an unsecure network 102. Therefore, a security protocol is used by devices (e.g., the endpoints 105 and 110) in system 100 to provide security processing in order to generate secured packets that are sent between the devices. In other words, the packets travel within a secure "tunnel" 120 through unprotected network 102, wherein the secure tunnel is created by virtue of the security processing via the application of the selected security protocols.

In one implementation, unsecured network 102 is an internet protocol (IP) network, wherein Internet Protocol version 4 (IPv4) or Internet Protocol version 6 (IPv6) is implemented to enable endpoints to be reachable anywhere within communication system 100 using IP addresses. Accordingly, security processing is implemented in communication system 100 using IPsec. Those skilled in the art, however, will recognize and appreciate that the specifics of this example are merely illustrative of some embodiments and that the teachings set forth herein are applicable in a variety of alternative settings. For example, since the teachings described do not depend on the security protocols being used, they can be applied to any type of security protocol wherein security endpoints need to determine the address of other security endpoints in order to build a security association database to implement a security protocol, although a communication system implementing the IPsec protocol (i.e., IPsec processing) is shown in this embodiment. As such, other alternative implementations of using different types of security protocols are contemplated and are within the scope of the various teachings described.

Additionally, communication system 100 is shown as having only one of MDT 104, MEG 105 and SU 106 and only one KMF 108, DEG 110, and DAS 112 for ease of illustration. However, in an actual system implementation, there is likely hundreds and even thousands of mobile devices that use communication system 100 to facilitate communications with other mobile and infrastructure devices in communication system 100. Moreover, the KMF and the DEG each likely serve a number of DASs in the system, and there may further be multiple KMFs and DEGs in an actual system implementation. Also, as used herein, the term packet is defined as a message that contains the smallest unit of media (e.g., data, voice, etc.) sent from a source endpoint to a destination endpoint. A packet containing data as payload is referred to as a data packet, a packet containing voice as payload is referred to as a voice packet. In an IP system, the originating packet further includes an original IP header containing the source endpoint data IP address and the destination endpoint data IP address, and another header if another protocol such as TCP (transmission control protocol) or UDP (user datagram protocol) is used. For the sake of ease of explanation, the media is referred to herein as data and the packet as a data packet, but this is in no way meant to limit the scope of the teachings herein to a particular type of packet being sent between devices in communication system 100.

It will be appreciated by those of ordinary skill in the art that the communication system 100 may also be used to exchange packets between one or more DASs 112 and that further DEGs 110 may be used to protect those packets, where those DASs may be in a fixed location or in a mobile environment.

The IPsec protocol suite contains two protocols that may be alternatively used for providing core security services. These protocols are Authentication header (AH) defined in RFC 4302 published December 2005 and Encapsulating Security Payload (ESP) defined in RFC 4303 published December 2005. The choice between whether to use the AH or the ESP protocol depends on the particular core security services needed in the system. ESP protocol provides more core security services. More particularly, ESP protocol is used in systems requiring not only integrity and authentication (also provided by AH) but also requiring confidentiality (which is not provided by AH).

Using the AH security protocol, the security endpoint generates an additional header encapsulating and protecting the payload, and the original header stays at the front of the packet, to generate a secured packet. Using the ESP security protocol, the entire original packet including all of the original headers is encapsulated in an ESP header and ESP trailer and a new header is generated and added to the front of the packet, to generate the secured packet.

IPsec also provides for the use of either transport mode or tunnel mode of operation for protecting packets. The choice again depends on the particular system requirements. Although transport mode utilizes a smaller header size, tunnel mode is applicable in the largest number of scenarios since tunnel mode can be used by host equipment (wherein the security processing is co-located in the same device with the application that generates the packets needing security processing) or by gateway equipment (wherein the security processing is provided in a separate device from the application that generates the packets needing security processing).

When the host equipment includes both the application and the security processing functionality, the security processing can be integrated into the single device using an integrated architecture implementation, wherein the security processing is natively in the layer-3 IP layer such as with IPv6; or using a bump in the stack (BITS) architecture that creates a protocol layer, e.g., an IPsec layer, that sits between the layer-3 IP layer and the layer-2 data link layer. The new layer intercepts packets sent down from the IP layer and adds security to them. When a gateway provides the security processing functionality, a bump in the wire (BITW) architecture is realized by a separate device that is placed within strategic points in the network to provide core security services to, for example, entire network segments.

The communication system 100 shown in FIG. 1 implements IPsec ESP in tunnel mode, thereby, providing for both host and gateway endpoints. It should be mentioned that although the MEG 105 is shown as separate from SU 106, in a different embodiment it may be integrated into the SU 106 and may provide additional protection for applications contained within SU106. For example, MEG 105 provides security processing (as a gateway) to the MDT 104 whether physically separate from SU 106 or integrated within SU 106. If MEG 105 is integrated within SU 106, it may provide security processing for applications integrated with the SU itself, such as Global Positioning System (GPS) location. Thus, data exchanged with a DAS 112 for both purposes is protected by the ESP tunnel 120. Moreover, DEG 110 provides security processing (as a gateway) for the one or more DASs 112. It should be mentioned that although the DEG 110 is shown as physically separate from the DAS 112, in a different embodiment the one or more DAS 112 could each be physically integrated with the DEG functionality using either tunnel or transport mode without departing from the scope of the teachings herein.

Moreover, as the term is used herein, a source endpoint generates originating packets, secures the originating packets, and sends the secured packets through the tunnel to a destination endpoint that processes the secured packet to generate the originating packet for presentation to an application at the intended recipient. Both the source and destination endpoints comprise a data endpoint housing the data application and a security endpoint (or encryption endpoint) performing the security processing, each having an IP address. Thus, a source or destination endpoint may comprise one or two physical devices depending on the particular system implementation. Moreover, the security endpoints (e.g., MEG 105 and DEG 110) sit at opposite ends of a security tunnel (e.g., tunnel 120). Also, as used herein, the IP address for the source data endpoint is termed a source endpoint data address; the IP address for the source security endpoint is termed a source endpoint security address; the IP address for the destination host endpoint is termed a destination endpoint data address; and the IP address for the destination security endpoint is termed a destination endpoint security address. In the system 100 implementation, many of the IP addresses, especially those associated with the mobile devices in the system, are dynamically provisioned as needed from a pool of available IP addresses and then returned to the pool when no longer needed for communications within the system.

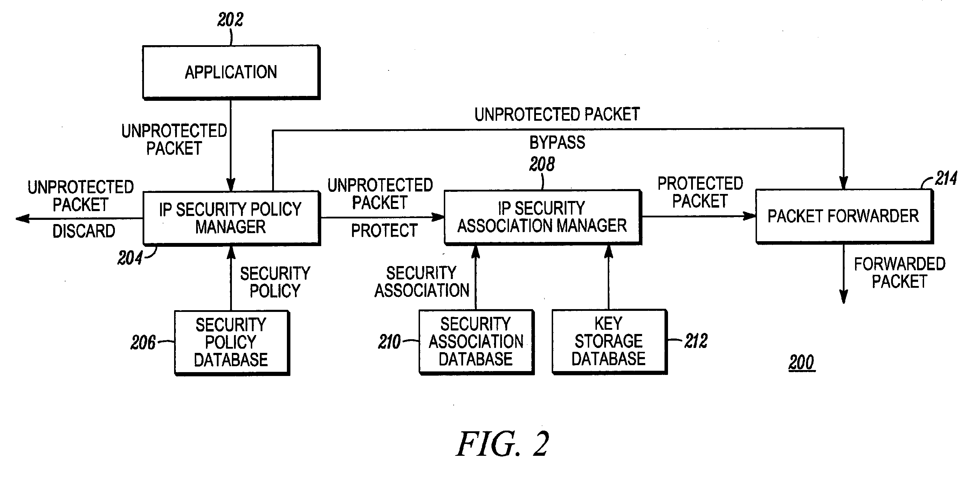

Turning now to FIG. 2, a block diagram of a source endpoint 200 in accordance with some embodiments is shown and generally indicated at 200. Source endpoint 200 comprises a data endpoint having an application 202. Source endpoint 200 further comprises a security endpoint having a security policy manager (SPM) 204 coupled to a security policy database (SPD) 206, a security association manager

(SAM) 208 coupled to a SAD 210 and a KSD (key storage database) 212, and a packet forwarder 214. The SAD 210, SPD 206, and KSD 212 databases can be implemented using any suitable form of storage device or memory element such as RAM (random access memory), DRAM (dynamic random access memory), etc., with the entries in these databases also comprising any suitable format.

The SPM 204 and SAM 208 are illustrated as functional processing blocks that can be implemented using any suitable processing device, such as any one or more of those mentioned below. The packet forwarder 214 comprises an interface for sending the packets over the unsecured network 102, with its implementation depending on the source security endpoint and the unsecured network 102 implementation used. For example, the packet forwarder 214 may be configured as a wired interface, e.g., an Ethernet connection, and/or a wireless interface comprising a transceiver (receiver and transmitter) and a processing block implementing the relevant wireless interface, e.g., APCO 25, TETRA, 802.11, etc.

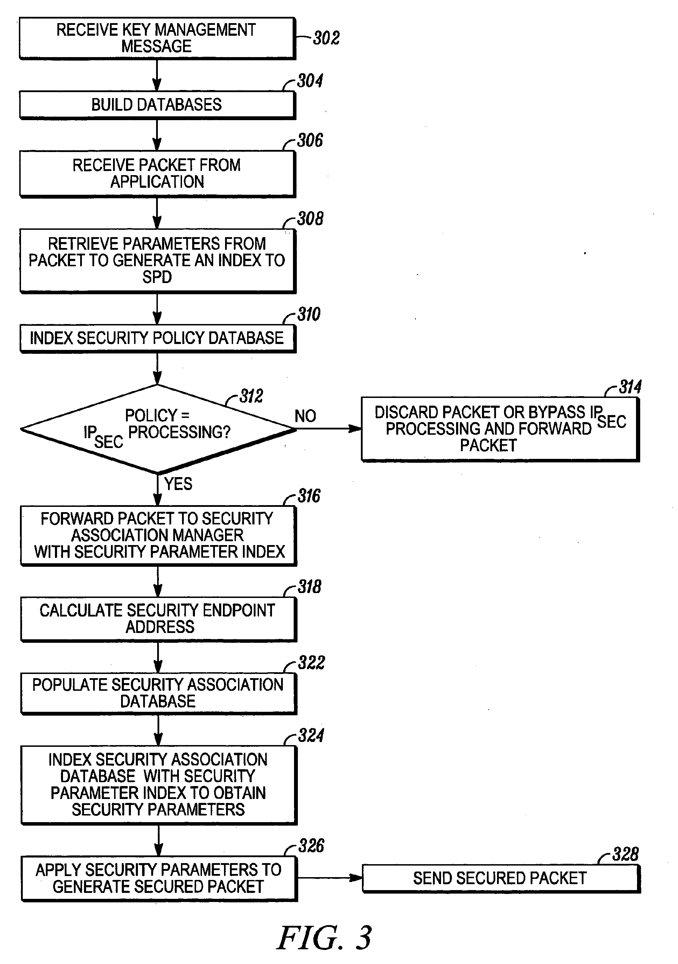

As mentioned above, a SA comprises elements that describe protocols and parameters (such as keys and algorithms) used by an endpoint to secure information or traffic flowing in one direction; and SAs need to be provisioned into the endpoints that provide security processing. FIG. 2 is next described in conjunction with FIG. 3, wherein is explained a method for sending outgoing secured packets in communication system 100, which includes a method for provisioning the corresponding SAs and building the databases (especially the SAD 210), in accordance with some embodiments.

In an embodiment, some portions of the SAs are provisioned in the source endpoint prior to receiving an outgoing packet from the application 202 needing security processing. These portions of the SAs can be included in a message, termed herein a key management message (KMM) sent (302) to the security endpoint and having a portion of the SA elements used to build (304) the SAD and also elements used to build the SPD in the endpoint. The KMM may take any number of forms and have a variety of information depending on the particular security protocols used in the system. Also, the KMMs may be manually provisioned into the endpoints or dynamically provisioned (other than through the use of IKE in this embodiment), such as by the KMF 108 creating and sending the KMMs to the endpoints over-the-air during a registration process. Table 1 below illustrates information contained in an illustrative embodiment of a KMM, identified by parameter and description of the parameter.

**Table 1**

| Parameter | Description |
|---|---|
| Entry Number | An index number indicating the order in which this association should be applied |
| Source Endpoint Data Address | Specifies the source endpoint data address, range of source endpoint data addresses or subnet of source endpoint data addresses to which this association applies. |
| Destination Endpoint Data address | Specifies the destination endpoint data address, range of destination endpoint data addresses, or subnet of destination endpoint data addresses to which this association applies. |
| Protocol | Specifies the protocol used by packets to which this association applies, e.g., ESP or AH. |
| Source Port | Specifies the source port (for protocols that use ports) of packets to which this association applies. |

(continued)

| Parameter | Description |
|---|---|
| Destination Port | Specifies the destination port (for protocols that use ports) of packets to which this association applies. |
| Remote Tunnel Endpoint | Specifies the address translation for determining the destination endpoint security address |
| Cryptogroup | Specifies the Cryptogroup that should be used with this association. (alternatively can be Storage Location Number (SLN) |
| Policy | Bypass/discard/process |

The SPD is built (304) using the parameters from the KMM of the source endpoint data address, the destination endpoint data address, the remote tunnel endpoint, the policy (i.e., the security policy), and the SLN. The SAD can be partially built (304) using the parameters from the KMM of the source endpoint data address, the destination endpoint data address, the protocol, and the SLN. More particularly, in one embodiment the endpoint stores (304) the information from the KMM into a data association database (DAD) and uses the information from the data association to build the SPD and the SAD for use in security processing. An additional parameter is included in all three databases that is not included in the KMM, which is the security parameter index (SPI) value, which used is by a security endpoint that encrypts a packet to reference the information in the SAD necessary for encrypting and authenticating the packet.

In IKE processing, the SPI value is a parameter that is negotiated between the security endpoints using the IKE message exchange sequence. However, since IKE is not used in these implementations, another method of determining the SPI value is needed. In order to minimize key management traffic, only one set of SAs for a given type of traffic, specified by IP address, protocol and port, is permitted between two endpoints. This restriction allows all of the tunnel parameters to be determined from the source and destination IP address of the packet being processed, with the exception of the key data. This allows the SPI value to be used only to specify the parameters of the key.

In order to maximize the benefit of the reduced key management traffic associated with the simplified tunnel parameter specification scheme described above, special significance is placed on the SPI value. Since it only specifies the key data, the SPI value is not explicitly provisioned by the key management facility, but rather determined by encoding the Key ID and Algorithm ID of the key used to encrypt the packet into the SPI. In an illustrative example, the SPI field is encoded in the format shown in Table 2 below.

**Table 2**

| 1 bit | 1 bit | 10 bit | 20 bit |
|---|---|---|---|
| Reserved | Authentication_Type | Algorithm ID | Key ID |

IPSec allows for the use of a variety of encryption and authentication algorithms. The use of these algorithms is determined before the security endpoint begins security processing of any packets. In the illustrative system 100, the KMF 108 handles the coordination of the algorithms used to encrypt and/or authenticate data. In one illustrative example, an algorithm suite represents the set of algorithms that are used by a given IPSec tunnel for both encryption and authentication. A single identifier, represented by a 10-bit Algorithm ID is used to identify an algorithm suite. In addition, a single key ID is used to identify the set of all key data required for use with the algorithm suite. This means that each keyset in an SLN holding keys used with the packet encryption service holds all key material required for both encryption and authentication.

When the key management facility provisions the SAD parameters into an endpoint, it associates an SA with the SLN. Each key in the SLN comprises all of the key data required for both authentication and encryption. The SLN, along with the currently active keyset, is used by the encrypting endpoint to select the key to use when encrypting a packet. As key data changes, the resulting SPI values will change accordingly while the SA continues to be linked to the SLN. The SPI is also included as part of an ESP header so that the destination encryption endpoint can properly index its SAD to decrypt the packet.

Returning to FIG. 2 and FIG. 3, the processing of outgoing packets in accordance with the teachings herein will be described hereinafter. When an unprotected packet is received (306) from the application (202), it is first evaluated by the SPM. The SPM 204 retrieves (308) parameters (e.g., the source endpoint data IP address and destination endpoint data IP address), generates a selector tuple <source IP, destination IP> and uses it to index (310) into the SPD to locate a security policy for the packet being evaluated. If (312) a policy cannot be located, the packet is discarded (314). If (312) a policy is located and it indicates that the packet must be discarded, the packet is discarded (314). If (312) the policy indicates that the packet must BYPASS IPsec processing, the packet is forwarded (314) to the network via the packet forwarder 214. Finally, if (312) the policy indicates that the packet must be processed with IPsec, the packet is forwarded (316), along with an SPI (which can be a linked SPI if a partial SAD is generated prior to receiving the packet), to the SAM 208 for processing.

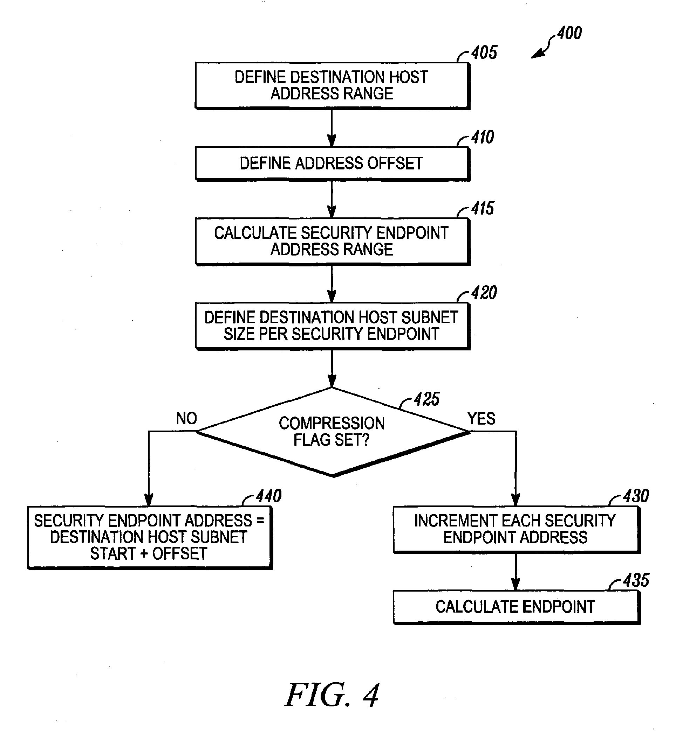

When a packet is received by the SAM 208, it calculates the security endpoint address (318) to use with the packet in accordance with some embodiments. The calculation of the security endpoint will be described in further detail herein below with regards, for example, to FIG. 4.

The tunnel endpoint address is used to create (322) an entry in the SAD specific to the destination endpoint. "Create" may mean creating an entry in an unpopulated SAD for the destination endpoint. "Create" may, alternatively, mean indexing an entry in the partially populated SAD, and populating the DST-IP' field for that entry. As mentioned earlier, generally SA pairs are created in the SAD. The Cryptogroup (or SLN) is used to query the KSD to obtain identification of an active encryption and authorization keyset to be used during the security processing.

This SAD entry generation creates a "just-in-time" population (322) of the SAD database that can now be indexed (324) using the SPI to link to the appropriate SA and obtain the security parameters (e.g., the security protocol ID, the encryption algorithm, the encryption key ID, the authentication algorithm ID, and the authentication key ID. The SAM applies (326) the security parameters to the original packet to generate the new header and the ESP header and trailer having a format defined in RFC 4303 and to encrypt the encapsulated payload, to provide a secured packet. The linked-SPI value is filled into the ESP header for use by the destination security endpoint to successfully index into its SAD. The destination endpoint security address is filled into the new header so that the packet reaches the destination security endpoint. The IPsec security processing is now complete, and the packet forwarder 214 sends (328) the protected packet (or secured packet) to the network 102.

When a packet is received from the network, it is first processed by the SAM in the destination security endpoint. If the packet is not protected with IPsec (does not contain an IPsec header), the packet is forward to the SPM. If the packet is protected with IPsec and an SA cannot be found for it, it is discarded. Finally if the packet is protected with IPsec and an appropriate SA is found by indexing the SAD with the SPI, the packet is authenticated, decrypted, and forwarded to the SPM. When the SPM receives a packet from the SAM, it verifies that the policy applied by the SAM matches the policy configured in the SPD. If the policy cannot be verified, the packet is discarded. If the policy can be verified, it is forwarded to the application.

Referring now back to the calculation of the security endpoint address (318), a means of providing associations from the addresses of destination MDTs 104 or DASs 112 to the addresses of their associated security endpoints MEGs 105 or DEGs 110 which would allow a single association to set the security policy for many hosts and security endpoints based on a calculation using base address and offset values is described hereinafter. A device such as an MDT 104 or DEG 110 which is the intended destination for a data packet will hereafter be described as a 'host' and the destination security gateway which provides the tunnel endpoint will be described as a 'security gateway'.

In one embodiment, a rule set based on an offset and sizing parameters is used to define the addressing part of a security association. This allows one association to be sent which allows the security end point addresses to be calculated for many host addresses.

The parameters in this rule set are as follows:

- Destination host address(es) which can be a single address, range of addresses or subnet for which the association rules will apply

- Offset - figure to be added to the destination host address to produce the relevant security endpoint address or the start of a range of addresses in which the security endpoints lie. The offset is added to the destination host address using an inclusive addition process, modulo the size of the address range of the packet transmission system, which is $3^{32}$ for IPv4 or $2^{128}$ for IPv6.

- Destination host subnet size per destination security endpoint

- Security endpoint address compression flag

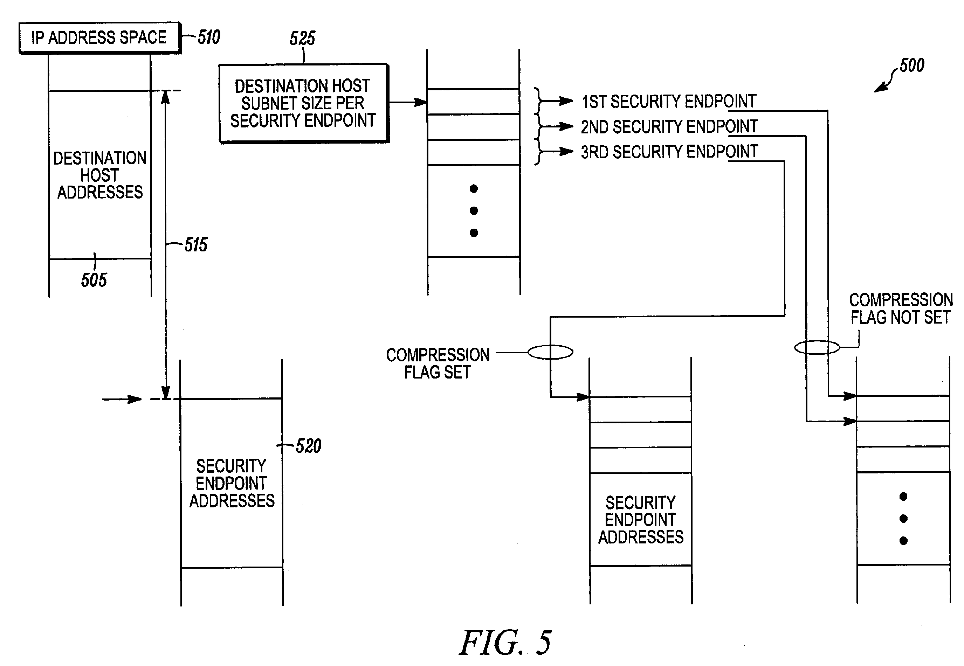

FIG. 4 illustrates a method of operation for the application 400 of this rule set to compose an association. The method of FIG. 4 will be discussed hereinafter utilizing the addressing diagram of FIG. 5.

As illustrated in FIG. 4, first, in Step 405, the range or subnet of destination host addresses 505 within the IP address space 510 for the association to apply is defined.

As illustrated, the destination host address range 505 determines the range of addresses of target hosts within the IP address space 510. The range or subnet of destination host addresses for the association to apply is defined, for example, by using Classless Inter-Domain Routing (CIDR) notation (where CIDR notation is used in the same way as used in RFC 4632). For example:

## 10.1.2.0/24 – 255 destination hosts

Next, in Step 410, an address offset 515 to apply to this range of hosts is defined. For example:

182.167.0.0

Note: in this example, this is expressed in subnet notation, but with an inclusive addition process it can be considered to be a hexadecimal number (0xB6A70000) so that overflow from one number block carries into the next.

Next, in Step 415, the address offset 515 is used to calculate the security endpoint address range 520 from the destination host address range 505.

Next, in Step 420, the subnet size 525 of each destination host subnet served by a single security endpoint is defined by a value such as a single byte, similar to the definition of subnet mask above using CIDR notation. For example:

30 - Indicates that 4 destination hosts are on each subnet served by a security endpoint (2 bits are not masked out)

Next, in Step 425, it is determined whether or not the compression flag is set. The decision to compress the security endpoint address range is set by use of the flag.

If 'compression flag' is set, each security endpoint address is an increment (of 1) from the last such address in Step 430. Next, in Step 435, the relevant endpoint can be calculated by division of difference of that destination host address from start of the destination host address range by the 'subnet size' parameter and adding the integer of the result to start of security endpoint address range.

If 'compression flag' not set, each security endpoint address is aligned with start of each destination host subnet plus the 'offset' value in Step 440.

Therefore in this first example, parameters may be set as follow:

- Destination host address according to subnet, e.g. 10.1.2.0/24

- Offset: 182.] 67.0.0

- Destination host subnet: 30/32 bits

- Compression flag: both values are illustrated in this example

The first useful destination host address (x.x.x.O and x.x.x.255 are treated as invalid) is 10.1.2.1. Adding the offset of 182.167.0.0 produces an address of 192.168.2.1, which is the first security endpoint address.

The destination host subnet size is defined as 30 (out of 32 bits) so 4 hosts would be assigned per security endpoint, excepting the first and last set in the range because of the reserved addresses. Therefore, 10.1.2.1 to 10.1.2.3 are assigned to the first security endpoint, 10.1.2.4 to 10.1.2.7 are assigned to the second security endpoint and so on.

If the compression flag was not set, the first set of destination host addresses are assigned to security endpoint 192.168.2.1, the second set to 192.168.2.4, and so on.

If the compression flag is set, the security endpoint IP address only increments by the destination host subnet size. Therefore in this case, the first set of destination host addresses 10.1.2.1 to 10.1.2.3 are assigned to 192.168.2.1; the second set 10.1.2.4 to 10.1.2.7 are assigned to 192.168.2.2 and so on.

For a second example, the security endpoint is the same as the destination host address. In this case, the parameters are set:

- Destination host address according to subnet, e.g. 10.1.2.0/24

- Offset: set to zero

- Destination host subnet: 32/32 bits (only one host per subnet)

- Compression flag: not set (N/A in this case)

For a third example, the destination host and security endpoint addresses exist on the same subnet, one IP address apart, and the network supports 50 mobile hosts and so require 100 IP addresses.

- Destination host address range: 10.1.2.25 to 10.1.2.124

- Offset: 0.0.0.1

- Destination host subnet: 32/32 bits (only one host per subnet)

- Compression flag: not set (N/A in this case)

Alternative embodiment

Instead of using a hexadecimal offset value, a start address for a range of security endpoint addresses could be specified. The rules in this case would be similar to the above, except that the specified 'start address' for security endpoints would start from this specified start address instead of a value calculated by use of the offset.

In this embodiment the other rules would remain the same. The security endpoint subnet size would be defined by the destination host subnet size. The destination host subnet size per security endpoint would be defined according to the destination host subnet size parameter, and therefore each N hosts would use the same security endpoint. The compression flag would determine whether the security endpoint subnet is economical with security endpoint address space, compressing security endpoint addresses to be contiguous, or mapping them to destination host addresses, wasting N-1 addresses for each security endpoint.

It would still be possible to have overlapping use of the same subnet for destination host and security endpoints in this case. For example, the third example in the first embodiment could be achieved by setting the security endpoint range start address to 1 (one) greater than the equivalent destination host, and defining the destination host subnet as 32/32 bits (one host per subnet).

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

In the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1.　A method for providing security associations for one or more data packets comprising:

> defining (405), by a source endpoint (200), a set of destination host addresses for a security association to apply;
> determining (410), by the source endpoint (200), an address offset to be added to a destination host address to produce a relevant security endpoint address;
> calculating (415), by the source endpoint (200), a security endpoint address range from the set of destination host addresses using the address offset; and
> applying (326), by the source endpoint (200), the security association to one or more data packets, destined for at least one destination host address, which is to be sent via a calculated security endpoint address in the security endpoint address range.

2.　The method of claim 1, wherein the set of destination host addresses comprises one of a range and a subnet of destination host addresses.

3.　The method of claim 1, further comprising defining (420), by the source endpoint (200), a value of a subnet size for each destination host subnet served by each security endpoint within the security endpoint address range.

4.　The method of claim 3, further comprising determining (425), by the source endpoint (200), whether the security endpoint address range is to be compressed.

5.　The method of claim 4, further comprising setting, by the source endpoint (200), a compression flag when the security endpoint address range is to be compressed.

6.　The method of claim 4, further comprising responsive to determining that the security endpoint address range is to be compressed:

> incrementing (430), by the source endpoint (200), each security endpoint address from a last security endpoint address; and
> calculating, by the source endpoint (200), a quantity of destination host addresses to which packets will be addressed by way of one security endpoint address from a start of the destination host address range by the 'subnet size' parameter and adding the integer of the result to the start of security endpoint address range.

7.　The method of claim 4, further comprising responsive to determining that the security endpoint address range is not to be compressed, aligning (440), by the source endpoint (200), each security endpoint address with a start of each destination host subnet plus the address offset.

8.　A method for providing security associations for one or more data packets comprising:

> defining (405), by a source endpoint (200), a set of destination host addresses for a security association to apply;
> identifying, by the source endpoint (200), a start address for a security endpoint address range;
> calculating, by the source endpoint (200), the security endpoint address range from the set of destination host addresses using the start address for the security endpoint address range; and
> applying (326), by the source endpoint (200), the security association to the one or more data packets, destined for at least one destination host address, which is to be sent via a calculated security endpoint address in the security endpoint address range.

9.  The method of claim 8, wherein the set of destination host addresses comprises one of a range and a subnet of destination host addresses.

10.  The method of claim 8, further comprising defining (420), by the source endpoint (200), a value of a subnet size for each destination host subnet served by each security endpoint within the security endpoint address range.

11.  The method of claim 10, further comprising determining (425), by the source endpoint (200), whether the security endpoint address range is to be compressed.

12.  The method of claim 11, further comprising setting, by the source endpoint (200), a compression flag when the security endpoint address range is to be compressed.

13.  The method of claim 11, further comprising responsive to determining that the security endpoint address range is to be compressed:

    incrementing (430), by the source endpoint (200), each security endpoint address from a last security endpoint address; and
    calculating, by the source endpoint (200), a quantity of destination host addresses to which packets will be addressed by way of one security endpoint address from a start of the destination host address range by the 'subnet size' parameter and adding the integer of the result to the start of security endpoint address range.

14.  The method of claim 11, further comprising responsive to determining that the security endpoint address range is not to be compressed, aligning (440), by the source endpoint (200), each security endpoint address with a start of each destination host subnet plus the address offset.

15.  A method for communicating secure packets between a source endpoint (200) and a destination endpoint through an unsecure network (102), the method comprising:

    generating, by the source endpoint (200), one or more originating packets;
    securing, by the source endpoint (200), the originating packets by:

        identifying, by the source endpoint (200), a security endpoint address range for which the address of the destination endpoint is included, wherein a security association applies to the security endpoint address range; and
        applying (326), by the source endpoint (200), the security association to the one or more originating packets to generate one or more secured packets;

    sending (328), via the source endpoint (200), the secured packets through a security tunnel through the unsecure network (102) to the destination endpoint; and
    processing, via the destination endpoint, the secured packet to generate the one or more originating packets for presentation to an application (104, 112) at an intended recipient.

**Patentansprüche**

1.  Verfahren zur Bereitstellung von Sicherheitsverknüpfungen für ein oder mehrere Datenpakete, das umfasst:

    Definition (405), durch einen Quellenendpunkt (200), eines Satzes von Zielhostadressen für eine anzuwendende Sicherheitsverknüpfung;
    Bestimmung (410), durch den Quellenendpunkt (200), eines Adressoffsets, das einer Zielhostadresse hinzuzufügen ist, um eine relevante Sicherheitsendpunktadresse zu erzeugen;
    Berechnung (415), durch den Quellenendpunkt (200), eines Sicherheitsendpunktadressenbereichs aus dem Satz von Zielhostadressen unter Verwendung des Adressoffsets; und
    Anwendung (326), durch den Quellenendpunkt (200), der Sicherheitsverknüpfung auf ein oder mehrere Datenpakete, die für mindestens eine Zielhostadresse bestimmt sind, die über eine berechnete Sicherheitsendpunktadresse in dem Sicherheitsendpunktadressenbereich zu senden sind.

**2.** Verfahren gemäß Anspruch 1, wobei der Satz von Zielhostadressen einen Bereich oder ein Teilnetz von Zielhostadressen umfasst.

**3.** Verfahren gemäß Anspruch 1, das weiterhin umfasst: Definition (420), durch den Quellenendpunkt (200), eines Wertes einer Teilnetzgröße für jedes Zielhostteilnetz, das durch jeden Sicherheitsendpunkt innerhalb des Sicherheitsendpunktadressenbereichs versorgt wird.

**4.** Verfahren gemäß Anspruch 3, das weiterhin umfasst: Bestimmung (425), durch den Quellenendpunkt (200), ob der Sicherheitsendpunktadressenbereich komprimiert werden soll.

**5.** Verfahren gemäß Anspruch 4, das weiterhin umfasst: Setzen, durch den Quellenendpunkt (200), einer Komprimierungsmarkierung, wenn der Sicherheitsendpunktadressenbereich komprimiert werden soll.

**6.** Verfahren gemäß Anspruch 4, das weiterhin umfasst, in Reaktion auf eine Bestimmung, dass der Sicherheitsendpunktadressenbereich komprimiert werden soll:

Inkrementierung (430), durch den Quellenendpunkt (200), jeder Sicherheitsendpunktadresse von einer letzten Sicherheitsendpunktadresse; und

Berechnung, durch den Quellenendpunkt (200), einer Menge von Zielhostadressen, an die Pakete adressiert werden, durch: eine Sicherheitsendpunktadresse von einem Anfang des Zielhostadressenbereichs mal dem "Teilnetzgröße"-Parameter und Hinzufügung der ganzen Zahl des Ergebnisses zu dem Anfang des Sicherheitsendpunktadressenbereichs.

**7.** Verfahren gemäß Anspruch 4, das weiterhin umfasst: in Reaktion auf eine Bestimmung, dass der Sicherheitsendpunktadressenbereich nicht komprimiert werden soll, Ausrichtung (440), durch den Quellenendpunkt (200), jeder Sicherheitsendpunktadresse mit einem Anfang eines jeden Zielhostteilnetzes plus dem Adressoffset.

**8.** Verfahren zur Bereitstellung von Sicherheitsverknüpfungen für ein oder mehrere Datenpakete, das umfasst:

Definition (405), durch einen Quellenendpunkt (200), eines Satzes von Zielhostadressen für eine anzuwendende Sicherheitsverknüpfung;

Identifizierung, durch den Quellenendpunkt (200), einer Startadresse für einen Sicherheitsendpunktadressenbereich;

Berechnung, durch den Quellenendpunkt (200), des Sicherheitsendpunktadressenbereichs aus dem Satz von Zielhostadressen unter Verwendung der Startadresse für den Sicherheitsendpunktadressenbereich; und

Anwendung (326), durch den Quellenendpunkt (200), der Sicherheitsverknüpfung auf ein oder mehrere Datenpakete, die für mindestens eine Zielhostadresse bestimmt sind, die über eine berechnete Sicherheitsendpunktadresse in dem Sicherheitsendpunktadressenbereich zu senden sind.

**9.** Verfahren gemäß Anspruch 8, wobei der Satz von Zielhostadressen einen Bereich oder ein Teilnetz von Zielhostadressen umfasst.

**10.** Verfahren gemäß Anspruch 8, das weiterhin umfasst:

Definition (420), durch den Quellenendpunkt (200), eines Wertes einer Teilnetzgröße für jedes Zielhostteilnetz, das durch jeden Sicherheitsendpunkt innerhalb des Sicherheitsendpunktadressenbereichs versorgt wird.

**11.** Verfahren gemäß Anspruch 10, das weiterhin umfasst: Bestimmung (425), durch den Quellenendpunkt (200), ob der Sicherheitsendpunktadressenbereich komprimiert werden soll.

**12.** Verfahren gemäß Anspruch 11, das weiterhin umfasst: Setzen, durch den Quellenendpunkt (200), einer Komprimierungsmarkierung, wenn der Sicherheitsendpunktadressenbereich komprimiert werden soll.

**13.** Verfahren gemäß Anspruch 11, das weiterhin umfasst, in Reaktion auf eine Bestimmung, dass der Sicherheitsendpunktadressenbereich komprimiert werden soll:

Inkrementierung (430), durch den Quellenendpunkt (200), jeder Sicherheitsendpunktadresse von einer letzten Sicherheitsendpunktadresse; und

Berechnung, durch den Quellenendpunkt (200), einer Menge von Zielhostadressen, an die Pakete adressiert werden, durch: eine Sicherheitsendpunktadresse von einem Anfang des Zielhostadressenbereichs mal dem "Teilnetzgröße"-Parameter und Hinzufügung der ganzen Zahl des Ergebnisses zu dem Anfang des Sicherheitsendpunktadressenbereichs.

14. Verfahren gemäß Anspruch 11, das weiterhin umfasst: in Reaktion auf eine Bestimmung, dass der Sicherheitsendpunktadressenbereich nicht komprimiert werden soll, Ausrichtung (440), durch den Quellenendpunkt (200), jeder Sicherheitsendpunktadresse mit einem Anfang eines jeden Zielhostteilnetzes plus dem Adressoffset.

15. Verfahren zur Kommunikation sicherer Pakete zwischen einem Quellenendpunkt (200) und einem Zielendpunkt durch ein unsicheres Netzwerk (102), wobei das Verfahren umfasst:

Erzeugung, durch den Quellenendpunkt (200), eines oder mehrerer Ursprungspakete;
Sicherung, durch den Quellenendpunkt (200), der Ursprungspakete durch:

Identifizierung, durch den Quellenendpunkt (200), eines Sicherheitsendpunktadressenbereichs, in dem die Adresse des Zielendpunktes enthalten ist, wobei eine Sicherheitsverknüpfung für den Sicherheitsendpunktadressenbereich gilt; und
Anwendung (326), durch den Quellenendpunkt (200), der Sicherheitsverknüpfung auf das eine oder die mehreren Ursprungspakete, um ein oder mehrere gesicherte Pakete zu erzeugen;

Sendung (328), über den Quellenendpunkt (200), der gesicherten Pakete durch einen Sicherheitstunnel durch das unsichere Netzwerk (102) zu dem Zielendpunkt; und
Verarbeitung, über den Zielendpunkt, der gesicherten Pakete, um das eine oder die mehreren Ursprungspakte zu erzeugen, zur Präsentation an eine Anwendung (104, 112) bei einem gewünschten Empfänger.

## Revendications

1. Procédé de fourniture d'associations de sécurité pour un ou plusieurs paquets de données comprenant :

la définition (405), par un point d'extrémité source (200), d'un ensemble d'adresses d'hôtes de destination pour une association de sécurité à appliquer ;
la détermination (410), par le point d'extrémité source (200), d'un décalage d'adresse à ajouter à une adresse d'hôte de destination pour produire une adresse de point d'extrémité de sécurité pertinente ;
le calcul (415), par le point d'extrémité source (200), d'une gamme d'adresses de points d'extrémité de sécurité à partir de l'ensemble d'adresses d'hôtes de destination à l'aide du décalage d'adresse ; et
l'application (326), par le point d'extrémité source (200), de l'association de sécurité à un ou plusieurs paquets de données, destinés à au moins une adresse d'hôte de destination, qui doit être envoyée via une adresse de point d'extrémité de sécurité calculée dans la gamme d'adresses de points d'extrémité de sécurité.

2. Procédé selon la revendication 1, dans lequel l'ensemble d'adresses d'hôtes de destination comprend l'un d'une gamme et d'un sous-réseau d'adresses d'hôtes de destination.

3. Procédé selon la revendication 1, comprenant en outre la définition (420), par le point d'extrémité source (200), d'une valeur d'une taille de sous-réseau pour chaque sous-réseau d'hôtes de destination desservi par chaque point d'extrémité de sécurité dans la gamme d'adresses de points d'extrémité de sécurité.

4. Procédé selon la revendication 3, comprenant en outre la définition (425), par le point d'extrémité source (200), du fait que la gamme d'adresses de points d'extrémité de sécurité doit ou non être compressée.

5. Procédé selon la revendication 4, comprenant en outre le réglage, par le point d'extrémité source (200), d'un drapeau de compression lorsque la gamme d'adresses de points d'extrémité de sécurité doit être compressée.

6. Procédé selon la revendication 4, comprenant en outre, en réponse à la détermination du fait que la gamme d'adresses de points d'extrémité de sécurité doit être compressée :

l'incrémentation (430), par le point d'extrémité source (200), de chaque adresse de point d'extrémité de sécurité à partir d'une dernière adresse de point d'extrémité de sécurité ; et

le calcul, par le point d'extrémité source (200), d'une quantité d'adresses d'hôtes de destination auxquelles des paquets seront adressés au moyen d'une adresse de point d'extrémité de sécurité à partir d'un début de la gamme d'adresses d'hôtes de destination par le paramètre "taille de sous-réseau" et l'ajout de l'entier du résultat au début de la gamme d'adresses de points d'extrémité de sécurité.

7. Procédé selon la revendication 4, comprenant en outre, en réponse à la détermination du fait que la gamme d'adresses de points d'extrémité de sécurité ne doit pas être compressée, l'alignement (440), par le point d'extrémité source (200), de chaque adresse de point d'extrémité de sécurité avec un début de chaque sous-réseau d'hôtes de destination plus le décalage d'adresse.

8. Procédé de fourniture d'associations de sécurité pour un ou plusieurs paquets de données comprenant :

la définition (405), par un point d'extrémité source (200), d'un ensemble d'adresses d'hôtes de destination pour une association de sécurité à appliquer ;

l'identification, par le point d'extrémité source (200), d'une adresse de début pour une gamme d'adresses de points d'extrémité de sécurité ;

le calcul, par le point d'extrémité source (200), de la gamme d'adresses de points d'extrémité de sécurité à partir de l'ensemble d'adresses d'hôtes de destination à l'aide de l'adresse de début pour la gamme d'adresses de points d'extrémité de sécurité ; et

l'application (326), par le point d'extrémité source (200), de l'association de sécurité au ou aux paquets de données, destinés à au moins une adresse d'hôte de destination, qui doit être envoyée via une adresse de point d'extrémité de sécurité calculée dans la gamme d'adresses de points d'extrémité de sécurité.

9. Procédé selon la revendication 8, dans lequel l'ensemble d'adresses d'hôtes de destination comprend l'un d'une gamme et d'un sous-réseau d'adresses d'hôtes de destination.

10. Procédé selon la revendication 8, comprenant en outre la définition (420), par le point d'extrémité source (200), d'une valeur d'une taille de sous-réseau pour chaque sous-réseau d'hôtes de destination desservi par chaque point d'extrémité de sécurité dans la gamme d'adresses de points d'extrémité de sécurité.

11. Procédé selon la revendication 10, comprenant en outre la définition (425), par le point d'extrémité source (200), du fait que la gamme d'adresses de points d'extrémité de sécurité doit ou non être compressée.

12. Procédé selon la revendication 11, comprenant en outre le réglage, par le point d'extrémité source (200), d'un drapeau de compression lorsque la gamme d'adresses de points d'extrémité de sécurité doit être compressée.

13. Procédé selon la revendication 11, comprenant en outre, en réponse à la détermination du fait que la gamme d'adresses de points d'extrémité de sécurité doit être compressée :

l'incrémentation (430), par le point d'extrémité source (200), de chaque adresse de point d'extrémité de sécurité à partir d'une dernière adresse de point d'extrémité de sécurité ; et

le calcul, par le point d'extrémité source (200), d'une quantité d'adresses d'hôtes de destination auxquelles des paquets seront adressés au moyen d'une adresse de point d'extrémité de sécurité à partir d'un début de la gamme d'adresses d'hôtes de destination par le paramètre "taille de sous-réseau" et l'ajout de l'entier du résultat au début de la gamme d'adresses de points d'extrémité de sécurité.

14. Procédé selon la revendication 11, comprenant en outre, en réponse à la détermination du fait que la gamme d'adresses de points d'extrémité de sécurité ne doit pas être compressée, l'alignement (440), par le point d'extrémité source (200), de chaque adresse de point d'extrémité de sécurité avec un début de chaque sous-réseau d'hôtes de destination plus le décalage d'adresse.

15. Procédé de communication de paquets sécurisés entre un point d'extrémité source (200) et une point d'extrémité de destination via un réseau non sécurisé (102), le procédé comprenant :

la génération, par le point d'extrémité source (200), d'une ou plusieurs paquets d'origine ;

la sécurisation, par le point d'extrémité source (200), des paquets d'origine par :

identification, par le point d'extrémité source (200), d'une gamme d'adresses de points d'extrémité de sécurité pour laquelle l'adresse du point d'extrémité de destination est incluse, où une association de sécurité s'applique à la gamme d'adresses de points d'extrémité de sécurité ; et
application (326), par le point d'extrémité source (200), de l'association de sécurité au ou aux paquets d'origine pour générer un ou plusieurs paquets sécurisés ;

l'envoi (328), via le point d'extrémité source (200), des paquets sécurisés à travers un tunnel de sécurité à travers le réseau non sécurisé (102) vers le point d'extrémité de destination ; et
le traitement, via le point d'extrémité de destination, du paquet sécurisé pour générer le ou les paquets d'origine pour la présentation à une application (104, 112) au niveau d'un destinataire prévu.

MOBILE DATA TERMINAL 104

116

MOBILE ENCRYPTION GATEWAY 105

117

SUBSCRIBER UNIT 106

118

UNSECURED NETWORK 102

KEY MANAGEMENT FACILITY 108

118

120

DATA ENCRYPTION GATEWAY 110

114

DATA APPLICATION SERVER(S) 112

100

*FIG. 1*

FIG. 2

```
┌─────────────────────────────┐
│   RECEIVE KEY MANAGEMENT    │─302
│         MESSAGE             │
└─────────────────────────────┘
              │
              ▼
┌─────────────────────────────┐  304
│      BUILD DATABASES        │
└─────────────────────────────┘
              │
              ▼
┌─────────────────────────────┐  306
│    RECEIVE PACKET FROM      │
│       APPLICATION           │
└─────────────────────────────┘
              │
              ▼
┌─────────────────────────────┐  308
│  RETRIEVE PARAMETERS FROM   │
│ PACKET TO GENERATE AN INDEX │
│          TO SPD             │
└─────────────────────────────┘
              │
              ▼
┌─────────────────────────────┐  310
│ INDEX SECURITY POLICY DATABASE │
└─────────────────────────────┘
              │
              ▼
```

POLICY = $IP_{SEC}$ PROCESSING? — 312

NO → DISCARD PACKET OR BYPASS $IP_{SEC}$ PROCESSING AND FORWARD PACKET — 314

YES

```
┌─────────────────────────────┐  316
│  FORWARD PACKET TO SECURITY │
│     ASSOCIATION MANAGER     │
│ WITH SECURITY PARAMETER INDEX │
└─────────────────────────────┘
              │
              ▼
┌─────────────────────────────┐  318
│  CALCULATE SECURITY ENDPOINT │
│          ADDRESS             │
└─────────────────────────────┘
              │
              ▼
┌─────────────────────────────┐  322
│ POPULATE SECURITY ASSOCIATION │
│         DATABASE             │
└─────────────────────────────┘
              │
              ▼
┌─────────────────────────────┐  324
│  INDEX SECURITY ASSOCIATION  │
│   DATABASE  WITH SECURITY    │
│ PARAMETER INDEX TO OBTAIN    │
│   SECURITY PARAMETERS        │
└─────────────────────────────┘
              │
              ▼
┌─────────────────────────────┐  326        ┌──────────────────────┐  328
│ APPLY SECURITY PARAMETERS TO │ ─────────→ │  SEND SECURED PACKET  │
│  GENERATE SECURED PACKET     │            └──────────────────────┘
└─────────────────────────────┘
```

*FIG. 3*

*FIG. 4*

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20018083011 A1

### Non-patent literature cited in the description

- *Request for Comments (RFC),* December 2005, vol. 4306